(19) Europäisches Patentamt
European Patent Office
Office européen des brevets

(11) **EP 1 955 491 B1**

(12) **EUROPÄISCHE PATENTSCHRIFT**

(45) Veröffentlichungstag und Bekanntmachung des Hinweises auf die Patenterteilung:
**04.01.2012 Patentblatt 2012/01**

(21) Anmeldenummer: **06819769.8**

(22) Anmeldetag: **27.11.2006**

(51) Int Cl.:
*H04L 12/46* *(2006.01)*     *G06F 13/40* *(2006.01)*
*H04L 12/64* *(2006.01)*

(86) Internationale Anmeldenummer:
**PCT/EP2006/068938**

(87) Internationale Veröffentlichungsnummer:
**WO 2007/060239 (31.05.2007 Gazette 2007/22)**

(54) **VERFAHREN UND VORRICHTUNG ZUR KOPPLUNG MINDESTENS ZWEIER UNABHÄNGIGER BUSSYSTEME**

METHOD AND DEVICE FOR COUPLING AT LEAST TWO INDEPENDENT BUS SYSTEMS

PROCÉDÉ ET DISPOSITIF POUR COUPLER AU MOINS DEUX SYSTÈMES DE BUS INDÉPENDANTS

(84) Benannte Vertragsstaaten:
**DE FR GB IT**

(30) Priorität: **28.11.2005 DE 102005056709**

(43) Veröffentlichungstag der Anmeldung:
**13.08.2008 Patentblatt 2008/33**

(73) Patentinhaber: **SIEMENS AKTIENGESELLSCHAFT**
**80333 München (DE)**

(72) Erfinder: **WEICHHOLD, Peter**
**90574 Rosstal (DE)**

(56) Entgegenhaltungen:
**US-A- 5 964 859     US-A- 6 101 565**
**US-B1- 6 430 626     US-B1- 6 807 609**

**Beschreibung**

Die Erfindung betrifft ein Verfahren zur Kopplung mindestens zweier unabhängiger Bussysteme (Buskopplung) sowie eine zur Ausführung des Verfahrens vorgesehene und geeignete Vorrichtung (Buskoppler).

Verfahren zur Buskopplung sowie dafür vorgesehene Einrichtungen, also Buskoppler, sind an sich bekannt. Solche bekannten Vorrichtungen oder Verfahren sind aber zumeist dafür vorgesehen, Daten, die zur Übertragung von einem ersten Bussystem (Ursprungsbussystem) zu einem weiteren Bussystem (Zielbussystem) vorgesehen sind, von einem im Bereich des Ursprungsbussystems verwendeten Protokoll in ein im Bereich des zielbussystems verwendetes Protokoll umzusetzen. Des Weiteren wird eine Buskopplung häufig auch dann verwendet, wenn es gilt, bei langen Übertragungsdistanzen Signale aufzufrischen oder zu verstärken. Solche Buskoppler werden auch als "Repeater" bezeichnet.

Aus der US 5 964 859 A ist ein Computersystem bekannt, bei dem zwei Busse über eine Buskopplung gekoppelt sind und Daten über diese Buskopplung zwischen den Bussen übertragen werden können. Die Buskopplung umfasst weiterhin einen Zwischenspeicher für Daten auf dem Transfer zwischen den Bussen. Die Busse können mit unterschiedlichen Frequenzen betrieben werden.

Die US 6 430 626 B1 beschreibt ein Netzwerksystem mit zwei Bussen sowie einer Buskopplung zwischen den Bussen zur Übertragung von Datenpaketen. Die Datenpakete können zwischen den Bussen und einem Zwischenspeicher übertragen werden, wobei die Buskopplung Mittel umfasst, mit denen bestimmte Zyklen, in denen Daten von den Bussen empfangen oder gesendet werden können, ermittelt werden.

Aus der US 6 807 609 B1 ist ein Computersystem bekannt, das einen ersten und zweiten Bus umfasst, denen eine erste bzw. eine zweite Zykluszeit zugeordnet ist. Erster und zweiter Bus werden über eine Speicherkontrollsteuerung gekoppelt, die einen Zwischenspeicher umfasst, von dem Daten zu vorbestimmten Zykluszeiten von einem Bus gelesen und zum anderen Bus übertragen werden.

Die Erfindung besteht darin, ein Verfahren zur Buskopplung anzugeben, das zum Transfer von isochronen Daten zwischen zumindest zwei unabhängigen Bussystemen eine besonders geeignete Methode vorschlägt, mit der die Isochronität der Daten sowohl auf Seiten des Ursprungsbussystems als auch auf Seiten des Zielbussystems selbst dann gewährleistet ist, wenn beide Bussysteme mit unterschiedlichen und/oder asynchronen Zykluszeiten betrieben werden.

Dies wird erfindungsgemäß mit den Merkmalen des in Anspruch 1 definierten Verfahrens gelöst. Danach ist zur Kopplung mindestens zweier unabhängiger Bussysteme, wobei jedem Bussystem eine Zykluszeit zugeordnet ist und wobei aus einer Folge von Daten (Datenfolge) jedes Datum in einem eigenen Zyklus auf das Bussystem gegeben wird, vorgesehen, dass aus einer zur Übertragung vom Ursprungsbussystem zu einem Zielbussystem vorgesehenen Datenfolge eine vorgegebene oder vorgebbare Anzahl von Daten zwischengespeichert wird und dass aus den zwischengespeicherten Daten auf Basis der Zykluszeit des Ursprungsbussystems jeweils ein entsprechendes Datum auf Basis der Zykluszeit des Zielbussystems ermittelt wird.

Die oben genannte Aufgabe wird in gleicher Weise auch mit einer Vorrichtung mit Mitteln zur Durchführung des oben genannten Verfahrens oder seiner nachfolgend beschriebenen Ausgestaltungen gelöst. Bevorzugt handelt es sich bei einer solchen Vorrichtung und den davon umfassten Mitteln um eine Einrichtung mit Verarbeitungsfunktionalität, wie z. B. einen Computer, gegebenenfalls in seiner Ausführungsform als so genanntes "embedded System", oder einen anwenderspezifischen integrierten Schaltkreis, in dem die einzelnen Verfahrensschritte in Software oder in kombinierter Form durch das Zusammenwirken von Software mit jeweils geeigneter Hardware implementiert sind.

Der Vorteil der Erfindung besteht darin, dass mit dem Zwischenspeichern einer vorgegebenen oder vorgebbaren Anzahl von Daten aus der Datenfolge aus dem Ursprungsbussystem eine Datenbasis zur Verfügung steht, anhand derer eine Ermittlung eines Momentanwerts auf Basis der Zykluszeit des Zielbussystems möglich wird.

Bevorzugt handelt es sich bei der zur Übermittlung vom Ursprungsbussystem zu zumindest einem Zielbussystem vorgesehenen Datenfolge um quantisierte Analogwerte, also z. B. Prozesssignale, die den Verlauf eines externen Messwertes, wie z. B. eine Temperaturkurve oder dergleichen, repräsentieren. Diese Messwerte werden im Bereich des Ursprungsbussystems zu äquidistanten Zeitpunkten, wobei sich diese Zeitpunkte aus oder anhand der Zykluszeit des Ursprungsbussystems ergeben, z. B. mittels eines dezentralen Peripheriegerätes zyklisch aufgenommen und mittels des erfindungsgemäßen Verfahrens auf die Basis der Zykluszeit des Zielbussystems umgesetzt.

Die Ermittlung des Datums erfolgt auf Basis der Zykluszeit des Zielbussystems durch Extrapolation, wobei als mathematische Grundlage für die Extrapolation sämtliche bekannten Extrapolations-Algorithmen möglich sind.

Die abhängigen Ansprüche sind auf bevorzugte Ausführungsformen der vorliegenden Erfindung gerichtet.

Wenn es sich bei den mindestens zwei Bussystemen jeweils um taktsynchrone Bussysteme handelt, ergibt sich ein reduzierter mathematischer Aufwand bei der Extrapolation.

Bevorzugt werden die Zyklusdauer des Ursprungsbussystems, die Zyklusdauer des Zielbussystems und ein Versatz zwischen den Zyklen beider Bussysteme gespeichert, so dass die Extrapolation auf Basis dieser Werte erfolgen kann. Mit diesen Parametern werden die unterschiedlichen Zeitbasen in beiden Systemen, also Ursprungsbussystem und Zielbussystem, und deren Relation zueinander in einer für die Extrapolation ausreichenden Art und Weise beschrieben.

In einer weiteren, bevorzugten Ausgestaltung der Erfindung erfolgt eine Filterung der zwischengespeicherten Daten, wobei als Filterung z. B. eine Unterdrückung von Einzelbitänderungen in den historischen Werten, also den zwischengespeicherten Daten, erfolgt, wodurch in vorteilhafter Weise das Quantisierungsrauschen im extrapolierten Verlauf der in das Zielbussystem übermittelten Daten verringert wird. Darüber hinaus ist eine weitere Filterung möglich, um eine noch bessere Korrelation des Werteverlaufs in den beiden gekoppelten Bussystemen zu erhalten. Des Weiteren gibt es die Möglichkeit, bei ausbleibenden Werten für eine bestimmte Zeitdauer die Extrapolation mit den bisherigen Werten weiterzuführen. Damit können kurzzeitige Störungen im Werteverlauf auf Seiten des Ursprungsbussystems überbrückt werden. Falls die Zyklusdauer des zielbussystems wesentlich kürzer ist als die zyklusdauer des Ursprungsbussystems werden mit zusätzlichen Extrapolationen Zwischenstützpunkte im Werteverlauf berechnet und als zusätzliches Datum, ebenfalls auf Basis der Zykluszeit des Zielbussystems, an das Zielbussystem übermittelt.

Der Vorteil der Erfindung und ihrer Ausgestaltungen besteht damit insbesondere darin, dass zwei oder mehrere Bussysteme, insbesondere zwei und mehrere echtzeitfähige Feldbusse, ohne zusätzliche Maßnahmen in den beteiligten einzelnen Bussystemen, wie z. B. Verzögerungsglieder oder ähnliches, taktsynchron koppelbar sind. Jedes Bussystem kann seinen eigenen Zyklus beibehalten, so dass entsprechend auch keine Synchronisierungsmaßnahmen erforderlich sind, die das jeweilige Bussystem beeinflussen würden. Des Weiteren können auch Bussysteme unterschiedlicher Art gekoppelt werden, bei denen eine Synchronisationsmaßnahme aufgrund fest definierter Zyklusraster nicht möglich ist.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombinationen zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich weiter vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen

FIG 1     eine schematisch vereinfachte Darstellung zweier gekoppelter Bussysteme und

FIG 2     einen Graph eines Messwertes.

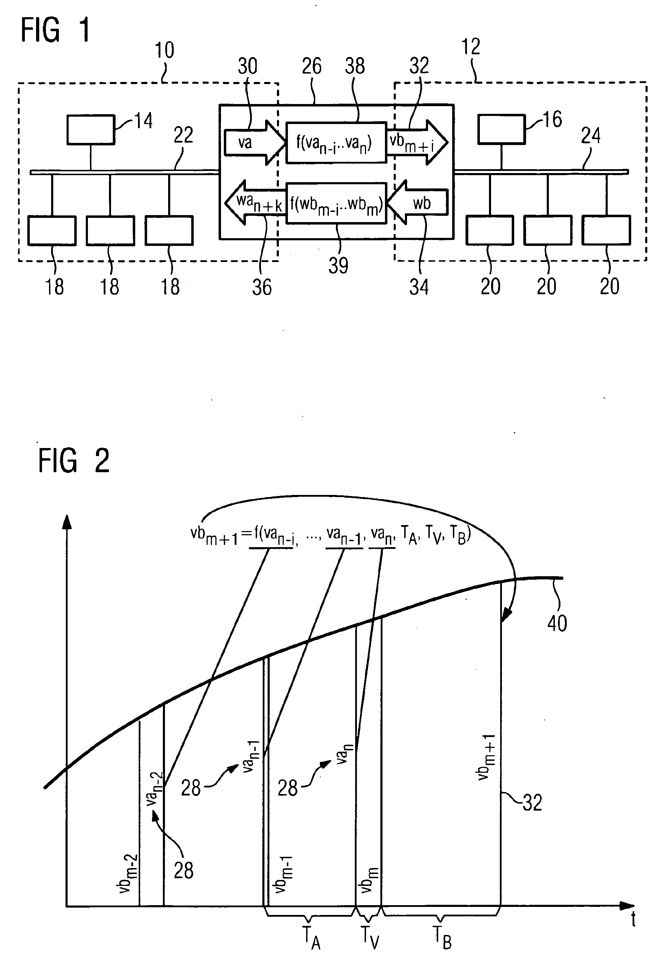

FIG 1 zeigt als Beispiel für eine Kopplung unabhängiger Bussysteme eine Kopplung eines ersten Bussystems 10 (Ursprungsbussystem 10) mit einem zweiten Bussystem 12 (Zielbussystem 12). Jedes Bussystem 10, 12 umfasst eine Anzahl Kommunikationsteilnehmer 14, 16; 18, 20, darunter z. B. jeweils ein Leitsystem 14, 16 sowie eine Anzahl so genannter Feldgeräte 18, 20. Die einzelnen Kommunikationsteilnehmer 14, 18; 16, 20 sind innerhalb des jeweiligen Bussystems 10, 12 über einen Bus 22, 24, insbesondere einen Feldbus, z. B. den so genannten PROFIBUS, kommunikativ miteinander verbunden.

Zur Kopplung der beiden Bussysteme 10, 12 ist ein Buskoppler 26 vorgesehen, der sowohl an den Bus 22 des Ursprungsbussystems 10 als auch an den Bus 24 des Zielbussystems 12 angeschlossen ist. Der Buskoppler 26 fungiert als Kopplung mindestens zweier unabhängiger Bussysteme 10, 12, im dargestellten Beispiel also als Kopplung zwischen dem Ursprungsbussystem 10 und dem Zielbussystem 12. Dabei wird aus einer Folge von Daten 28 (FIG 2) - Datenfolge 30 -, die zur Übertragung vom Ursprungsbussystem 10 in das Zielbussystem 12 vorgesehen sind, eine vorgegebene oder vorgebbare Anzahl von Daten 28 im Bereich des Buskopplers 26 zwischengespeichert. Dazu weist der Buskoppler 26 einen nicht näher dargestellten jedoch an sich bekannten Speicher auf. Aus den zwischengespeicherten Daten 28 generiert der Buskoppler 26 ein zur Weiterleitung in das Zielbussystem 12 vorgesehenes Datum 32. Die Bezeichnungen "Ursprungsbussystem" 10 und "Zielbussystem" 12 sind im vorliegenden Zusammenhang willkürlich und lediglich zur Unterscheidung gewählt; selbstverständlich kann die Buskopplung auch in Richtung vom zweiten Bussystem 12 zum ersten Bussystem 10 erfolgen, so dass dann aus einer im Bereich des zweiten Bussystems 12 anfallenden Datenfolge 34 mittels des Buskopplers 26 ein Datum 36 zur Übermittlung in das erste Bussystem 10 generiert wird. Die Generierung jeweils eines Datums 32, 36 zur Übermittlung in das jeweilige Zielbussystem 12 erfolgt mit Hilfe von Extrapolationsmitteln 38, 39, deren Funktion nachfolgend anhand von FIG 2 beschrieben wird.

FIG 2 zeigt einen Graph 40 eines Messwertes, also z. B. den Verlauf einer Temperaturkurve, die mittels eines der Feldgeräte 18 des Ursprungsbussystems 10 abgetastet wird, indem zyklisch als Datum 28 einzelne Messwerte ($va_{n-2}$, $va_{n-1}$, $va_n$) aufgenommen werden. Die Aufnahme dieser Messwerte ($va_{n-2}$, $va_{n-1}$, $va_n$) erfolgt zu im Wesentlichen äquidistanten Zeitpunkten, wobei der Abstand zwischen jeweils zwei benachbarten Messwerten 28 im Wesentlichen durch eine Zykluszeit des jeweiligen Bussystems 10, 12, hier also diejenige des Ursprungsbussystems 10, vorgegeben ist. Die Zykluszeit des Ursprungsbussystems ist in dem Koordinatensystem in FIG 2 mit $T_A$ bezeichnet. Die Zykluszeit eines Bussystems 10, 12 ergibt sich in an sich bekannter Weise aufgrund des zur Übermittlung von Daten über den jeweiligen Bus 22, 24 des Bussystems 10, 12 vorgesehenen so genannten Busprotokolls.

Die Kopplung mindestens zweier Bussysteme 10, 12 entsprechend der Erfindung soll so erfolgen, dass anhand von Daten 28, die auf Seiten des Ursprungsbussystems 10 den Graph 40 eines externen Messwertes beschreiben, ein Datum 32 (und bei mehrfacher Wiederholung des Verfahrens entsprechend eine Vielzahl von Daten 32) generiert wird, die auf Seiten des Zielbussystems 12 den gleichen Graph 40 oder zumindest im Wesentlichen den gleichen Graph 40 beschreiben. Eine unmittelbare Übermittlung der Daten 28 aus dem Ursprungsbussystem 10 in das Zielbussystem 12 ist dabei in aller Regel nicht möglich, weil beide Bussysteme 10, 12 unterschiedliche Buszykluszeiten aufweisen, wobei die Buszykluszeit des Zielbussystems 12 in FIG 2 mit $T_B$ bezeichnet ist. Die Extrapolationsmittel 38, 39 generieren aus einer Anzahl zwischengespeicherter Daten 28 jeweils ein Datum 32 zur Übermittlung in das jeweilige Zielbussystem 12. Dies ist in FIG 2 symbolisch ausgedrückt als

$$vb_{m+1} = f(va_{n-i}, \dots, va_{n-1}, va_n, T_A, T_V, T_B),$$

wobei

$va_{n-i}$, ..., $va_{n-1}$, $va_n$ eine vorgegebene oder vorgebbare Anzahl von Daten 28 (Datenfolge 30) aus dem Ursprungsbussystem 10, $T_A$ die Zykluszeit des Ursprungsbussystems 10, $T_B$ die Zykluszeit des Zielbussystems 12 und $T_V$ einen Versatz zwischen den Buszyklen beider Bussysteme 10, 12 bezeichnet.

Das im dargestellten Beispiel gemäß FIG 2 auf diese Weise zur Übermittlung in das Zielbussystem 12 generierte Datum 32 ist der Wert $vb_{m+1}$.

Man erkennt leicht, dass durch Wiederholung des Verfahrens sich weitere Werte auf dem Graph 40 synchron zum Buszyklus des jeweiligen Zielbussystems 12 generieren lassen. Im Ergebnis entsteht auf diese Weise eine Folge von Daten 32 für das Zielbussystem 12, die den Graph 40 durch eine äquidistante Folge von Stützstellen entsprechend einem durch die Buszykluszeit des Zielbussystems 12 vorgegebenen Zeitraster beschreiben. Damit ist gewährleistet, dass in beiden gekoppelten Bussystemen 10, 12 eine Verarbeitung der durch den Graph 40 vorgegebenen externen Prozesssignale in der Art und Weise erfolgt, dass beide gekoppelten Bussysteme 10, 12 von einem identischen oder zumindest näherungsweise identischen Verlauf des Graphen 40 ausgehen.

Um sich die Wirkungsweise der Erfindung besser vor Augen führen zu können, mag man sich vorstellen, es würde stets nur der Messwert $va_j$ als Messwert $vb_k$ in das Zielbussystem 12 übermittelt, also z. B. gemäß der Darstellung in FIG 2 der Messwert $va_n$ als Messwert $vb_m$. Da der Messwert $vb_m$ im Bereich des Zielbussystems 12 nur innerhalb des dort vorherrschenden Buszyklusses verarbeitet werden kann, erfolgt dessen Verarbeitung in Ansehung des tatsächlichen Verlaufs des Graphen 40 "zu spät", nämlich genau um den Versatz $T_V$ zu spät. Das Ergebnis für das Zielbussystem 12 wäre, dass zu dem Zeitpunkt, zu dem das Datum $vb_m$ ausgewertet wird, von einem zu kleinen Wert des externen Signals ausgegangen würde. Je nach aktuellem Versatz der asynchronen Buszyklen der jeweils gekoppelten Bussysteme 10, 12 kann der Fehler dabei erheblich sein. Zumindest ist jedoch ohne die Erfindung nicht gewährleistet, dass beide Bussysteme 10, 12 von einem identischen oder zumindest näherungsweise identischen Verlauf des Prozesssignals ausgehen können.

Zusammenfassend lässt sich die Erfindung damit wie folgt beschreiben: Es wird ein Verfahren sowie eine zur Ausführung des Verfahrens vorgesehene und geeignete Vorrichtung zur Kopplung mindestens zweier unabhängiger Bussysteme 10, 12 angegeben, wobei jedem Bussystem 10, 12 eine Zykluszeit $T_A$, $T_B$ zugeordnet ist und wobei aus einer Folge von Daten 28 - Datenfolge 30 - jedes Datum 28 in einem eigenen Zyklus auf den Bus 22, 24 des jeweiligen Bussystems 10, 12 gegeben wird, wobei aus einer zur Übertragung vom Ursprungsbussystem 10 zu einem Zielbussystem 12 vorgesehenen Datenfolge 30 eine vorgegebene oder vorgebbare Anzahl von Daten 28 zwischengespeichert wird und wobei aus den zwischengespeicherten Daten 28 auf Basis der Zykluszeit $T_A$ des Ursprungsbussystems 10 jeweils ein entsprechendes Datum 32 auf Basis der Zykluszeit $T_B$ des Zyklusbussystems 12 ermittelt wird.

**Patentansprüche**

1. Verfahren zur Kopplung mindestens zweier unabhängiger Bussysteme (10, 12), wobei jedem Bussystem (10, 12) eine Zykluszeit zugeordnet ist und wobei aus einer Folge von Daten (28)

   - Datenfolge (30) - jedes Datum (28) in einem eigenen Zyklus auf das Bussystem (10, 12) gegeben wird,

   wobei aus einer zur Übertragung von einem der Bussysteme (10, 12) - Ursprungsbussystem (10) - zu einem weiteren Bussystem - Zielbussystem (12) - vorgesehenen Datenfolge (30) eine vorgegebene oder vorgebbare Anzahl von Daten (28) zwischengespeichert wird und
   wobei aus den zwischengespeicherten Daten (28) auf Basis der Zykluszeit des Ursprungsbussystems (10) jeweils ein entsprechendes Datum (32) auf Basis der Zykluszeit des Zielbussystems (18) ermittelt wird,
   **dadurch gekennzeichnet, dass**
   die Ermittlung des Datums (32) auf Basis der Zykluszeit des Zielbussystems (12) durch Extrapolation erfolgt.

2. Verfahren nach Anspruch 1, wobei es sich bei den mindestens zwei Bussystemen (10, 12) jeweils um taktsynchrone Bussysteme (10, 12) handelt.

3. Verfahren nach Anspruch 2, wobei die Zyklusdauer des Ursprungsbussystems (10), die Zyklusdauer des Zielbussystems (12) und ein Versatz zwischen den Zyklen beider Bussysteme (10, 12) gespeichert wird und wobei die Extrapolation auf Basis dieser Werte erfolgt.

4. Verfahren nach Anspruch 3, wobei eine Filterung der zwischengespeicherten Daten (28) erfolgt.

5. Vorrichtung mit Mitteln (38, 39) zur Durchführung des Verfahrens nach einem der vorangehenden Ansprüche.

6. Computerprogramm mit durch einen Computer ausführbaren Programmcodeanweisungen zur Implementierung des Verfahrens nach einem der Ansprüche 1 bis 4, wenn das Computerprogramm auf einem Computer ausgeführt wird.

7. Computerprogrammprodukt mit einem durch einen Computer ausführbaren Computerprogramm gemäß Anspruch 6.

**Claims**

1. Method and device for coupling at least two independent bus systems (10, 12), a cycle time being assigned to each bus system (10, 12) and each data item (28) from a sequence of data (28) (data sequence (30)) being transmitted to the bus system (10, 12) in a separate cycle,
   a predetermined or predeterminable number of data items (28) being buffered from a data sequence (30) that is to be transmitted from one of the bus systems (10, 12) (original bus system (10)) to another bus system (target bus system (12)) and a respective data item (32) being determined in each case on the basis of the cycle time of the target bus system (18) from the buffered data (28) on the basis of the cycle time of the original bus system (10),
   **characterised in that**
   the data (32) is determined by extrapolation on the basis of the cycle time of the target bus system (12).

2. Method according to claim 1, the at least two bus systems (10, 12) each being clocked bus systems (10, 12).

3. Method according to claim 2, the cycle duration of the original bus system (10), the cycle duration of the target bus system (12) and an offset between the cycles of both bus systems (10, 12) being stored and the extrapolation being performed on the basis of these values.

4. Method according to claim 3, a filtering of the buffered data (28) being performed.

5. Device with means (38, 39) for performing the method according to one of the preceding claims.

6. Computer program with program code instructions that can be executed by a computer for implementing the method according to one of claims 1 to 4, if the computer program is executed on a computer.

7. Computer program product with a computer program according to claim 6 which can be executed by a computer.

**Revendications**

1. Procédé de couplage d'au moins deux systèmes ( 10, 12 ) de bus indépendants, un temps de cycle étant affecté à chaque système ( 10, 12 ) de bus et dans une séquence de données ( 28 ) - séquence ( 30 ) de données - chaque donnée ( 28 ) est envoyée au système ( 10, 12 ) de bus dans un cycle propre,
dans lequel, à partir d'une séquence ( 30 ) de données prévue pour la transmission de l'un des systèmes ( 10, 12 ) de bus - système ( 10 ) de bus d' origine - à un autre système de bus - système ( 12 ) de bus cible - un nombre prescrit ou pouvant l'être de données ( 28 ) est mémorisé intermédiairement et
dans lequel, dans les données ( 28 ) mémorisées intermédiairement, on détermine, sur la base du temps de cycle du système ( 10 ) de bus d'origine, respectivement une donnée ( 32 ) correspondante, sur la base du temps de cycle du système ( 18 ) de bus cible,
**caractérisé en ce que**
la détermination de la donnée ( 32 ) s'effectue sur la base du temps de cycle du système ( 12 ) de bus cible par extrapolation.

2. Procédé suivant la revendication 1, dans lequel les au moins deux systèmes ( 10, 12 ) de bus sont respectivement des systèmes ( 10, 12 ) de bus synchrones.

3. Procédé suivant la revendication 2, dans lequel la durée de cycle du système ( 10 ) de bus d'origine, la durée de cycle du système ( 12 ) de bus cible et un écart entre les cycles des deux systèmes ( 10, 12 ) de bus sont mémorisés et l'extrapolation s'effectue sur la base de ces valeurs.

4. Procédé suivant la revendication 3, dans lequel on effectue un filtrage des données ( 28 ) mémorisées intermédiairement.

5. Dispositif comprenant des moyens ( 38, 39 ) pour effectuer le procédé suivant l'une des revendications précédentes.

6. Programme informatique, comprenant des instructions de code de programme, pouvant être réalisé par un ordinateur pour la mise en oeuvre du procédé suivant l'une des revendications 1 à 4, lorsque le programme informatique est réalisé sur un ordinateur.

7. Produit de programme informatique, comprenant un programme informatique suivant la revendication 6, qui peut être réalisé par un ordinateur.

## FIG 1

## FIG 2

$$vb_{m+1} = f(va_{n-i}, ..., va_{n-1}, va_n, T_A, T_V, T_B)$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5964859 A
- US 6430626 B1
- US 6807609 B1